Europäisches Patentamt

European Patent Office

Office européen des brevets

(19)

(11) Veröffentlichungsnummer: **0 298 356 B1**

(12) **EUROPÄISCHE PATENTSCHRIFT**

(45) Veröffentlichungstag der Patentschrift: **21.08.91**

(51) Int. Cl.5: **F16C 13/00**, B29C 67/22, B29C 37/00

(21) Anmeldenummer: **88110358.4**

(22) Anmeldetag: **29.06.88**

(54) Verfahren zum Herstellen eines Kunststoffteils und Bauteil.

(30) Priorität: **03.07.87 DE 3722052**

(43) Veröffentlichungstag der Anmeldung:
**11.01.89 Patentblatt 89/02**

(45) Bekanntmachung des Hinweises auf die
Patenterteilung:
**21.08.91 Patentblatt 91/34**

(84) Benannte Vertragsstaaten:
**DE ES FR GB IT**

(56) Entgegenhaltungen:
**DE-A- 2 355 273      DE-A- 2 642 380**
**DE-A- 3 316 841      FR-A- 2 534 992**
**GB-A- 944 611        US-A- 4 019 789**
**US-A- 4 025 132      US-A- 4 072 373**
**US-A- 4 588 542**

**PATENT ABSTRACTS OF JAPAN, Band 10,**
**Nr. 346 (M-537)[2402], 21. November 1986,**
**Seite 96 M 537; & JP-A-61 146 518 (TOYODA**
**GOSEI CO., LTD) 04-07-1986**

(73) Patentinhaber: **INA Wälzlager Schaeffler KG**
**Industriestrasse 1-3 Postfach 1220**
**W-8522 Herzogenaurach(DE)**

(72) Erfinder: **Rabe, Jürgen, Dipl.-Ing.**
**Talblick 6**
**W-8521 Aurachtal(DE)**

## Beschreibung

Die Erfindung betrifft ein Verfahren zum Herstellen eines Kunststoffteiles, dessen Außenfläche eine Lauffläche, insbesondere für einen Riemen oder eine Kette, bildet, und zwar am Außenumfang des Außenringes oder der Gleitbuchse eines als Wälz- oder Gleitlager ausgebildeten metallischen Einlegeteiles, in dem in ein geschlossenes Formwerkzeug eine polymerisierbare Kunststoffmasse eingespritzt und anschließend ausgehärtet wird. Weiterhin betrifft die Erfindung ein nach einem solchen Verfahren hergestelltes Bauteil.

Bei einem derartigen, praktizierten Verfahren, wird nach dem Einsetzen des Einlegeteils, beispielsweise des Wälzlagers in das Formwerkzeug die Kunststoffmasse unter einem sehr hohen Spritz- bzw. Preßdruck, beispielsweise ca. 800 bar bis 1500 bar in das Formwerkzeug eingepreßt (DE-A-33 16 841). Dieser Druck muß vom Außenring aufgenommen werden. Der Außenring kann sich unter dem hohen Spritz- bzw. Preßdruck verformen. Dies insbesondere dann, wenn die Wandstärke des Außenrings aufgrund konstruktiver Bedingungen klein ist. Außerdem kann die Hertz'sche Pressung zwischen der Lauffläche und den Wälzkörpern Werte annehmen, die weit außerhalb der zulässigen Belastbarkeit liegen. Dies muß vermieden werden.

Wird der Außenring eines Wälzlagers oder einer Gleitbuchse in eine polymere Kunststoffmasse eingebettet, dann schwindet diese bekanntermaßen beim Aushärten. Durch die Schwindung wird ein erheblicher Druck auf den Außenumfang ausgeübt. Auch dieser kann den Außenring bzw. die Gleitbuchse verformen oder die Laufbahnen beschädigen.

Es wäre möglich, das Kunststoffteil, in das das Einlegeteil eingebettet werden soll, als separates Bauteil zu fertigen und dieses dann mit dem Einlegeteil so zu verbinden, daß durch die Verbindung auf das Lager keine zu hohe Belastung aufgebracht wird. Eine derartige Methode besteht beispielsweise darin, den Raum zwischen Kunststoff- und Einlegeteil mit einem elastischen Kunststoff auszuspritzen (US-A-40 72 373). Dies erscheint jedoch umständlich und unwirtschaftlich.

In der DE-A-32 39 334 ist ein anderes Verfahren beschrieben. Bei diesem wird zwischen einen metallischen Lagerring und eine metallische Welle eine Einlage aus Kunststoff eingegossen oder eingespritzt. Nicht die Einlage, sondern das Lager bildet die Außenfläche des Bauteils. Sowohl der Innenumfang als auch der Außenumfang der Einlage bilden Sitzflächen.

Die Einlage soll den Lagerring und die Welle dauerhaft verbinden. Sie soll die im Laufe der Alterung auftretende Schwindung ausgleichen.

Hierfür ist der Einlage ein Treibmittel zugesetzt. Das Treibmittel erzeugt in der Einlage während der Gebrauchsdauer expansive Kräfte. Die Einlage ist also nach der Polymerisation nicht hart. Durch das Schrumpfen der Einlage bei der Polymerisation wird der Lagerring hier nicht überbeansprucht, da er an der äußeren Sitzfläche der Einlage liegt. Die an der inneren Sitzfläche anliegende Welle kann die Schrumpfungskräfte aufnehmen.

Weiterhin ist es aus der US-A-45 88 542 bekannt, Fahrradreifen an eine Felge zu spritzen, indem zunächst die Felge in ein Formwerkzeug eingesetzt und anschließend eine mit Treibmittel versetzte, den Reifen bildende Kunststoffmasse eingespritzt wird, die dann expandiert und sich an die Innenwandung des Formwerkzeuges und die Felge anlegt. Bei dieser Expansion entstehen Makroporen im Reifen, die den Eindruck eines luftgefüllten Gummireifens vermitteln sollen. Weiterhin handelt es sich bei dem Reifenwerkstoff um einen weichen, elastischen Kunststoff, dessen Abriebfestigkeit auch aufgrund der Makroporen relativ gering sein dürfte.

Aufgabe der Erfindung ist es, ein Verfahren der eingangs genannten Art vorzuschlagen, bei dem der Druckaufbau so erfolgt, daß das Einlegeteil nicht unzulässig stark belastet wird. Weiterhin ist es Aufgabe der Erfindung, ein Bauteil anzugeben, bei dem ein den Außenumfang eines Einlegeteils umschließendes Kunststoffteil das Einlegeteil nicht unzulässig stark belastet, wobei das Kunststoffteil dennoch an seiner Oberfläche eine hohe Verschleißfestigkeit aufweist.

Ein die genannte Aufgabe lösendes Verfahren ist dadurch gekennzeichnet, daß - wie an sich bekannt - eine mit einem Treibmittel versetzte Kunststoffmasse verwendet wird, wobei der Anteil des Treibmittels in der Kunststoffmasse höchstens 4 Gewichtsprozent beträgt, daß die Kunststoffmasse unter einem im Vergleich zu üblichen Spritz- bzw. Preßdrücken niedrigen Druck zwischen 10 und 60 bar in das Formwerkzeug gefüllt wird, daß eine derartige Kunststoffmasse verwendet wird, die nach dem Aushärten eine Härte von mindestens 60 Shore A aufweist, daß die Kunststoffmasse unter Wirkung des Treibmittels unter Bildung von Mikroporen expandiert und daß die Mikroporen die Schrumpfkräfte des polymerisierenden Kunststoffes so reduzieren, daß der für den Außenring bzw. für die Gleitbuchse maximal zulässige Forminnendruck nicht überschritten wird. Während des Einfüllens der Kunststoffmasse tritt kein Druck auf, der das Einlegeteil verformen könnte. Es kann somit auch ein Wälzlager mit einem vergleichsweise schwachen Außenring in die Kunststoffmasse eingebettet werden.

Durch das Treibmittel wird in der geschlossenen Form der zur Gestaltung des Kunststoffteils und dessen Verbindung mit dem Einlegeteil nötige Forminnendruck erzeugt. Dieser schädigt das Einlegeteil nicht. Der nötige Treibmittelanteil ist gering, jedenfalls geringer als bei einem Schäumverfahren. Durch die Bemessung des Anteils an Treibmittel ist der für den Außenring bzw. den Innenring maximal zulässige Forminnendruck einstellbar.

Beim Aushärten schrumpft die Kunststoffmasse. Der dadurch auf das Einlegeteil wirkende Druck wird von den infolge des Treibmittels entstandenen Mikroporen im Kunststoff reduziert. Ein Schrumpfen der Lauffläche wird in Kauf genommen und ist unschädlich.

Das Kunststoffteil weist hohe Festigkeitswerte auf und ist abrieb- und verschleißfest. Es ist fest mit dem Einlegeteil verbunden. Das Kunststoffteil kann im Vergleich zum Einlegeteil dickwandig sein. Das Kunststoffteil ist beispielsweise als Riemenspannrolle geeignet, deren integraler Teil das Einlegeteil ist.

Ein erfindungsgemäßes Bauteil, bei dem ein Kunststoffteil den Außenumfang eines metallischen Einlegeteils umschließt, wobei die Außenfläche des Kunststoffteils eine Lauffläche bildet, zeichnet sich dadurch aus, daß im Kunststoffteil Poren eingeschlossen sind und das Kunststoffteil an den Außenumfang geschrumpft ist.

Vorteilhafte Ausgestaltungen der Erfindung ergeben sich aus Unteransprüchen und der folgenden Beschreibung. In der Zeichnung zeigen:

Figur 1 eine Bandspannrolle im Schnitt,

Figur 2 ein zweites Ausführungsbeispiel,

Figur 3 ein weiteres Ausführungsbeispiel im Teilschnitt und

Figur 4 eine Teilansicht des Ausführungsbeispiels nach Fig.3.

Die Bandspannrolle weist einen Befestigungsbolzen(1) auf, der an seiner Außenfläche mit einer Laufbahn(2) für Wälzkörper(3) versehen ist. Die Wälzkörper(3) liegen in einem Außenring(4).

Der Außenring(4) ist als Einlegeteil in ein Kunststoffteil(5) formschlüssig eingebettet. Dieses ist an seinem Außenumfang mit einer hier von einer Vielfachverzahnung gebildeten Lauffläche(6) versehen, die der Führung eines Riemens mit Vielfach-V-Profil dient. Es handelt sich also um eine Poly-V-Riemenrolle. Weitere Einsatzbeispiele sind am Außenumfang glatte Rollen, Zahnriemenrollen oder Keilriemenrollen.

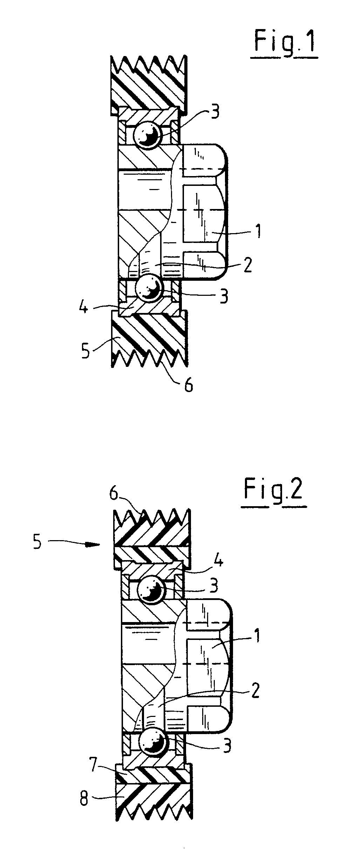

Beim Ausführungsbeispiel nach Figur 1 weist das Kunststoffteil(5) Poren auf, die auf Treibmittel in der das Kunststoffteil(5) bildenden Kunststoffmasse zurückzuführen sind. Das Kunststoffteil(5) ist an den Außenring(4) geschrumpft.

Beim Ausführungsbeispiel nach Figur 2 weist das Kunststoffteil(5) einen inneren Teilbereich(7) und einen diesen umschließenden äußeren Teilbereich(8) auf. Hier weist nur der innere Teilbereich(7) auf Treibmittel zurückzuführende Poren auf.

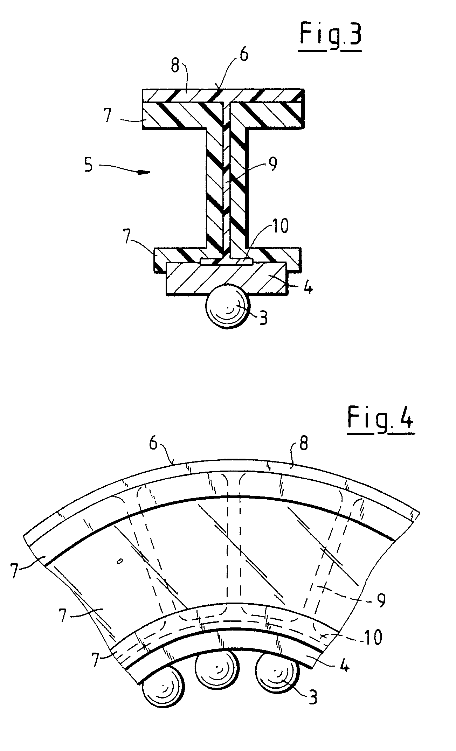

Beim Ausführungsbeispiel nach den Figuren 3 und 4 weist der äußere Teilbereich(8) zusätzlich speichenartige Verrippungen(g) auf. Diese gehen in einen Ring(10) über, der sich um den Außenring(4) erstreckt.

Das Kunststoffteil(5) nach Fig.1 bzw. dessen innerer Teilbereich(7) nach den Figuren 2 bis 4 besteht beispielsweise aus einem hochfesten, verstärkten Kunststoff, wie Polyamid 6 6 mit 30 Gew.% Glasfaserverstärkung. Das Kunststoffteil(5) nach Fig.1 bzw. dessen äußerer Teilbereich(8) nach den Figuren 2 bis 4 besteht beispielsweise aus einem abriebfesten, unverstärkten Kunststoff, wie Polyoxymethylen (POM) oder Polyurethan (PUR). Es kann auch Polybutylenterephtalat verwendet werden. Die Härte des Kunststoffteils(5) ist gleich oder größer als 60 Shore A. Bei Spannrollen -nicht bei Antriebsrollen - ist der äußere Teilbereich friktionsbegünstigend ausgelegt.

Das Kunststoffteil(5) der Figur 1 wird in folgendem Verfahren an dem Außenring(4) hergestellt:

In ein Formwerkzeug wird zentriert das Lager bestehend aus Befestigungsbolzen(1), Wälzkörpern(3) und Außenring(4) eingesetzt. In das Formwerkzeug wird dann eine Kunststoffmasse intrudiert, der Treibmittel beigemischt ist. Der Treibmittelanteil liegt zwischen 0,001 Gew.-% bis 4 Gew.-%, insbesondere liegt der Treibmittelanteil zwischen 0,15 Gew.-% und 1,5 Gew.-%.

Die Kunststoffmasse wird mit einem vergleichsweise kleinen Druck von 10 bar bis 60 bar intrudiert. Bei diesem Druck besteht nicht die Gefahr, daß sich der Außenring(4) verformt oder die Wälzkörper an den Laufbahnen überlastet werden. Das Formwerkzeug ist dabei geschlossen. Die Entlüftung erfolgt über übliche Entlüftungskanäle.

Danach wird das Treibmittel wirksam, wobei sich in der Kunststoffmasse Mikroporen entwickeln. Dadurch wird die Kunststoffmasse zur Bildung der Lauffläche(6) gegen das Formwerkzeug und gegen den Außenumfang des Außenrings(4) gepreßt.

Dann härtet die Kunststoffmasse aus. Beim Aushärten schwindet der Kunststoff. Der dadurch auf den Außenring(4) wirkende Druck ist vergleichsweise klein, da beim Schwinden die Mikroporen im Kunststoff komprimiert werden. Ein Schwinden der Lauffläche(6) fällt nicht ins Gewicht.

Ein Treibmittel wird üblicherweise bei der Kunststoffeinbettung solcher Lager nicht verwendet. Durch die Verwendung des Treibmittels ist erreicht, daß beim Einfüllen der Kunststoffmasse und bei deren Schwinden nur ein geringer Druck auf den Außenring(4) ausgeübt wird. Dieser kann dementsprechend dünnwandig sein.

Das Verfahren zur Herstellung des Bauteils nach Figur 2 läuft folgendermaßen ab:

Nach dem Zentrieren der aus Befestigungsbolzen-(1), Wälzkörpern(3) und Außenring(4) bestehenden Baueinheit in dem Formwerkzeug wird zunächst die den äußeren Teilbereich(8) des Kunststoffteils-(5) bildende Kunststoffmasse eingeführt Dieser Kunststoffmasse ist kein Treibmittel beigemischt.

Nach dem Einbringen der Kunststoffmasse des äußeren Teilbereichs(8) wird die den inneren Teilbereich(7) bildende Kunststoffmasse in das Formwerkzeug eingebracht. Dieser ist Treibmittel beigemischt. Der Treibmittelanteil liegt in der oben genannten Größenordnung.

Es kann jedoch auch zunächst die den inneren Teilbereich(7) bildende Kunststoffmasse und danach dann die den äußeren Teilbereich(8) bildende Kunststoffmasse eingebracht werden.

In dem geschlossenen Formwerkzeug wird das Treibmittel wirksam und bildet Mikroporen im inneren Teilbereich(7). Diese pressen die Kunststoffmassenanteile gegen das Formwerkzeug. Durch die Bildung der Mikroporen wird außerdem die Kunststoffmasse des inneren Teilbereichs(7) mit dem Außenring(4) verpreßt.

Danach härtet die Kunststoffmasse aus. Die dabei erfolgende Schwindung führt zwar zu einem festen Anschrumpfen des inneren Teilbereichs(7) an den Außenring(4) und des äußeren Teilbereichs-(8) an den inneren Teilbereich(7). Der auf den Außenring(4) wirkende Druck überlastet diesen jedoch nicht. Denn die Mikroporen im inneren Teilbereich(7) führen, indem sie komprimiert werden, zu einer Reduzierung des auf den Außenring-(4) wirkenden Drucks.

Das Bauteil nach den Figuren 3,4 läßt sich folgendermaßen herstellen:

Nach dem Zentrieren des den Außenring(4) aufweisenden Wälzlagers wird zunächst die den äußeren Teilbereich(8), die speichenartige Verrippung(9) und den Ring(10) bildende, elastische Kunststoffmasse, der kein Treibmittel beigemischt ist, eingespritzt. Danach wird die den inneren Teilbereich(7) bildende, Treibmittel enthaltende Kunststoffmasse eingebracht. Bei deren Aufschäumen wird dem Schrumpfen des äußeren Teilbereichs(8) so entgegengewirkt, daß kein unerwünschter Druck auf den Außenring(4) ausgeübt wird.

Es ist auch möglich, den äußeren Teilbereich-(8), der die Lauffläche für einen zu spannenden Riemen bildet, mit der speichenartigen Verrippung-(9) und dem Ring(10) als vorgefertigtes Teil herzustellen. Dieses wird dann mit dem Ring(10) auf den Außenring(4) geschoben und danach wird die den inneren Teilbereich(7) bildende Kunststoffmasse um dieses Teil und den Außenring(4) gespritzt.

Besteht das Kunststoffteil(5) aus zwei unterschiedlichen Werkstoffen (vgl. Fig. 2 bis 4), dann kann eine formschlüssige Verbindung oder eine Verbindung im warmelastischen Zustand vorgesehen sein. Im letztgenannten Fall sollte der Schmelzpunkt der zuerst eingespritzten Kunststoffmasse gleich oder niedriger liegen als der der danach eingespritzten Kunststoffmasse.

Die beschriebenen Verfahren lassen sich auch bei anderen Bauteilen als der erwähnten Bandspannrolle einsetzen. Mit dem genannten Verfahren kann an einem vergleichsweise dünnwandigen Außenring eines Wälzlagers oder einer Gleitbuchse ein Kunststoffteil hergestellt werden, dessen Außendurchmesser wesentlich größer als der des Außenrings bzw. der Gleitbuchse ist.

**Patentansprüche**

1. Verfahren zum Herstellen eines Kunststoffteiles, dessen Außenfläche eine Lauffläche, insbesondere für einen Riemen oder eine Kette, bildet, und zwar am Außenumfang des Außenringes oder der Gleitbuchse eines als Wälz- oder Gleitlager ausgebildeten metallischen Einlegeteiles, in dem in ein geschlossenes Formwerkzeug eine polymerisierbare Kunststoffmasse eingespritzt und anschließend ausgehärtet wird, **dadurch gekennzeichnet,** daß - wie an sich bekannt - eine mit einem Treibmittel versetzte Kunststoffmasse verwendet wird, wobei der Anteil des Treibmittels in der Kunststoffmasse höchstens 4 Gewichtsprozent beträgt, daß die Kunststoffmasse unter einem im Vergleich zu üblichen Spritz- bzw. Preßdrücken niedrigen Druck zwischen 10 und 60 bar in das Formwerkzeug gefüllt wird, daß eine derartige Kunststoffmasse verwendet wird, die nach dem Aushärten eine Härte von mindestens 60 Shore A aufweist, daß die Kunststoffmasse unter der Wirkung des Treibmittels unter Bildung von Mikroporen expandiert und daß die Mikroporen die Schrumpfkräfte des polymerisierenden Kunststoffes so reduzieren, daß der für den Außenring bzw. für die Gleitbuchse maximal zulässige Forminnendruck nicht überschritten wird.

2. Verfahren nach Anspruch 1, **dadurch gekennzeichnet,** daß der Anteil des Treibmittels in der Kunststoffmasse 0,001 Gewichtsprozent bis 4 Gewichtsprozent beträgt.

3. Verfahren nach Anspruch 2, **dadurch gekennzeichnet,** daß der Anteil des Treibmittels in der Kunststoffmasse 0,15 Gewichtsprozent bis 1,5 Gewichtsprozent beträgt.

4. Verfahren nach einem der vorhergehenden Ansprüche, **dadurch gekennzeichnet,** daß die Kunststoffmasse Polyamid 66 oder Polyoxymethylen oder Polybutylenterephthalat, insbesondere mit Glasfaserverstärkung, ist.

5. Verfahren nach einem der vorhergehenden Ansprüche, **dadurch gekennzeichnet, daß** das Formwerkzeug teilweise mit einem mit Treibmittel gemischten Kunststoffmassenanteil und teilweise mit einem Kunststoffmassenanteil ohne Treibmittel gefüllt ist.

6. Verfahren nach Anspruch 5, **dadurch gekennzeichnet, daß** zunächst der Kunststoffmassenanteil ohne Treibmittel in einen vom Außenumfang des Einlegeteiles beabstandeten Bereich des Formwerkzeuges eingebracht wird und daß dann der Kunststoffmassenanteil mit Treibmittel zwischen den Außenumfang des Einlegeteiles und den Kunststoffmassenanteil ohne Treibmittel gefüllt wird.

7. Verfahren nach Anspruch 6, **dadurch gekennzeichnet, daß** vor dem Einbringen des Kunststoffmassenanteiles mit Treibmittel zwischen dem Kunststoffmassenanteil ohne Treibmittel und dem Außenumfang des Einlegeteiles ein elastischer Zwischenbereich vorgesehen wird.

8. Kunststoffteil, dessen Außenfläche eine Lauffläche, inbesondere für einen Riemen oder eine Kette, bildet, und zwar am Außenumfang des Außenringes (4) oder der Gleitbuchse eines als Wälz- oder Gleitlager ausgebildeten metallischen Einlegeteiles, in dem in ein geschlossenes Formwerkzeug eine polymerisierbare Kunststoffmasse eingespritzt und anschließend ausgehärtet wird, hergestellt nach dem Verfahren gemäß einem oder mehreren der Ansprüche 1 bis 7, **dadurch gekennzeichnet, daß** im Kunststoffteil (5) Poren eingeschlossen sind und das Kunststoffteil (5) an den Außenumfang des Außenringes (4) oder der Gleitbuchse geschrumpft ist.

9. Kunststoffteil nach Anspruch 8, **dadurch gekennzeichnet, daß** das Kunststoffteil (5) einen inneren Teilbereich (7) und einen äußeren Teilbereich (8) aufweist und daß die Poren nur im inneren Teilbereich (7) vorgesehen sind.

10. Kunststoffteil nach Anspruch 9, **dadurch gekennzeichnet, daß** zwischen dem äußeren Teilbereich (8) und dem Außenumfang des Einlegeteiles (4) eine elastische Abstützung (9,10) vorgesehen ist, die innerhalb des inneren Teilbereiches (7) liegt.

11. Kunststoffteil nach Anspruch 10, **dadurch gekennzeichnet, daß** der äußere Teilbereich (8) und die Abstützung (9,10) von einem vorgefertigten Teil gebildet sind, das auf den Außenumfang des Einlegeteiles (4) aufgeschoben und mit dem inneren Teilbereich (7) umspritzt ist.

12. Kunststoffteil nach Anspruch 10 oder 11, **dadurch gekennzeichnet, daß** die Abstützung von einer speichenartigen Verrippung (9) und einem Ring (10) gebildet ist.

13. Kunststoffteil nach einem der vorhergehenden Ansprüche 9 bis 12, **dadurch gekennzeichnet, daß** der äußere, eine Lauffläche für einen Riemen bildende Teilbereich (8) aus einem abriebfesten, unverstärkten Kunststoff und der innere Teilbereich (7) aus einem hochfesten, verstärkten Kunststoff besteht.

**Claims**

1. Method of manufacturing a plastics part whose outer surface forms a running surface, in particular for a belt or a chain, which running surface is located on the outer periphery of the outer ring or of the slide bushing of a metallic insert designed as a rolling or sliding bearing, in which method a polymerizable plastics mass is injected into a closed mould and subsequently hardened, characterized in that, as known in itself, a plastics mass mixed with an expanding agent is used, the content of expanding agent in the plastics mass not exceeding 4 percent by weight, the plastics mass is filled into the mould under a pressure of between 10 and 60 bars, which is low as compared with usual injection or compression pressures, a plastics mass is used which presents a hardness of at least 60 Shore A after hardening, the plastics mass expands under the action of the expanding agent with the formation of micropores and the micropores reduce the shrinkage forces of the polymerizing plastics material in such a way that the maximum permissible internal mould pressure for the outer ring or the slide bushing is not exceeded.

2. Method according to claim 1, characterized in that the content of expanding agent in the plastics mass lies between 0.001 and 4 percent by weight.

3. Method according to claim 2, characterized in that the content of expanding agent in the plastics mass lies between 0.15 and 1.5 percent by weight.

4. Method according to one of the preceding claims, characterized in that the plastics mass is polyamide 66 or polyoxymethylene or polybutyleneterephthalate, in particular with glass fibre reinforcement.

5. Method according to one of the preceding claims, characterized in that the mould is filled partially with a plastics mass mixed with an expanding agent and partially with a plastics mass without expanding agent.

6. Method according to claim 5, characterized in that at first the plastics mass without expanding agent is filled into a region of the mould spaced from the outer periphery of the insert and then the plastics mass with expanding agent is filled between the outer periphery of the insert and the plastics mass without expanding agent.

7. Method according to claim 6, characterized in that before the introduction of the plastics mass with expanding agent, an elastic intermediate region is provided between the plastics mass without expanding agent and the outer periphery of the insert.

8. Plastics part whose outer surface forms a running surface, in particular for a belt or a chain, which running surface is located on the outer periphery of the outer ring (4) or of the slide bushing of a metallic insert designed as a rolling or sliding bearing, in which a polymerizable plastics mass is injected into a closed mould and subsequently hardened and which is fabricated according to the method of one or more of the claims 1 to 7, characterized in that pores are enclosed in the plastics part (5) and the plastics part (5) is shrunk onto the outer periphery of the outer ring (4) or of the slide bushing.

9. Plastics part according to claim 8, characterized in that the plastics part (5) comprises an inner partial region (7) and an outer partial region (8) and the pores are provided only in the inner partial region (7).

10. Plastics part according to claim 9, characterized in that between the outer partial region (8) and the outer periphery of the insert (4), an elastic support (9,10) is provided which lies within the inner partial region (7).

11. Plastics part according to claim 10, characterized in that the outer partial region (8) and the support (9, 10) are formed by a prefabricated part which is pushed onto the outer periphery of the insert (4) and around which the inner partial region (7) is sprayed-on.

12. Plastics part according to claim 10 or 11, characterized in that the support is formed by a spoke-like ribbing (9) and a ring (10).

13. Plastics part according to one of the preceding claims 9 to 12, characterized in that the outer partial region (8) forming a running surface for a belt is made of an abrasion resistant non-reinforced plastics material and the inner partial region (7) is made of a high-strength reinforced plastics material.

## Revendications

1. Procédé de fabrication d'un élément en matière plastique dont la surface externe forme une surface de roulement, en particulier pour une courroie ou pour une chaîne, située plus précisément à la périphérie extérieure de la bague externe ou de la douille de glissement d'une pièce métallique d'insertion configurée en forme d'un palier à roulement ou d'un palier lisse, procédé selon lequel une masse de matière plastique polymérisable est injectée dans un moule fermé et ensuite durcie, caractérisé en ce que - comme connu en soi - il est employé une masse de matière plastique mélangée avec un agent gonflant, le taux de l'agent gonflant dans la masse de matière plastique n'excédant pas 4 % en poids, en ce que la masse de matière plastique est chargée dans le moule avec une pression comprise entre 10 et 60 bars, qui est faible par comparaison avec des pressions usuelles d'injection ou de compression, en ce qu'il est employé une telle masse de matière plastique qui, après le durcissement présente une dureté d'au moins 60 shore A, et en ce que la masse de matière plastique se détend sous l'action de l'agent gonflant avec formation de micropores et en ce que les micropores réduisent les forces de retrait de la matière plastique polymérisante de telle sorte que la pression interne maximum admissible du moule pour la bague externe ou la douille de glissement n'est pas dépassée.

2. Procédé selon la revendication 1, caractérisé en ce que la teneur en agent gonflant dans la masse de matière plastique est de 0,001 % à 4 % en poids.

3. Procédé selon la revendication 2, caractérisé en ce que la teneur en agent gonflant dans la masse de matière plastique est de 0,15 % à 1,5 % en poids.

4. Procédé selon l'une des revendications précédentes, caractérisé en ce que la masse de matière plastique est du polyamide 6 6 ou du polyoxyméthylène ou du polybutylène téréphtalate, avec en particulier un renforcement en fibres de verre.

5. Procédé selon l'une des revendications précédentes, caractérisé en ce que le moule est rempli partiellement d'une masse de matière plastique mélangée avec un agent gonflant et partiellement d'une masse de matière plastique sans agent gonflant.

6. Procédé selon la revendication 5, caractérisé en ce qu'on introduit d'abord la masse partielle de matière plastique sans agent gonflant dans une région du moule située à une distance de la périphérie extérieure de la pièce d'insertion, et on introduit ensuite la masse partielle de matière plastique contenant de l'agent gonflant entre la périphérie extérieure de la pièce d'insertion et la masse partielle de matière plastique sans agent gonflant.

7. Procédé selon la revendication 6, caractérisé en ce que, avant l'introduction de la masse partielle de matière plastique contenant de l'agent gonflant, on prévoit une zone intermédiaire élastique entre la masse partielle de matière plastique sans agent gonflant et la périphérie extérieure de la pièce d'insertion.

8. Elément en matière plastique dont la surface externe forme une surface de roulement, en particulier pour une courroie ou pour une chaîne, située plus précisément sur la périphérie extérieure de la bague externe (4) ou de la douille de glissement d'une pièce métallique d'insertion configurée sous forme d'un palier à roulement ou d'un palier lisse, élément dans lequel une masse de matière plastique polymérisable est injectée dans un moule fermé et ensuite durcie, cet élément étant fabriqué suivant le procédé tel que défini par une ou plusieurs des revendications 1 à 7, caractérisé en ce que des pores sont enfermés dans l'élément en matière plastique (5), et en ce que ledit élément en matière plastique (5) est contracté sur la périphérie extérieure de la bague externe (4) ou de la douille de glissement.

9. Elément en matière plastique selon la revendication 8, caractérisé en ce que l'élément en matière plastique (5) comprend une zone intérieure (7) et une zone extérieure (8), et en ce que les pores sont prévus seulement dans la zone intérieure (7).

10. Elément en matière plastique selon la revendication 9, caractérisé en ce qu'entre la zone extérieure (8) et la périphérie extérieure de la pièce d'insertion (4) est prévu un support élastique (9, 10) qui est situé à l'intérieur de la zone intérieure (7).

11. Elément en matière plastique selon la revendication 10, caractérisé en ce que la zone extérieure (8) et le support (9, 10) sont formés par une pièce préfabriquée qui est rapportée sur la périphérie extérieure de la pièce d'insertion (4) et autour de laquelle la zone intérieure (7) est formée par projection.

12. Elément en matière plastique selon la revendication 10 ou 11, caractérisé en ce que le support est formé par des nervures en forme de rayons (9) et par un anneau (10).

13. Elément en matière plastique selon une des revendications 9 à 12, caractérisé en ce que la zone extérieure (8) qui forme une surface de roulement pour une courroie est constituée d'une matière plastique non renforcée et résistante au frottement, et en ce que la zone intérieure (7) est constituée d'une matière plastique renforcée et à haute résistance.

_Fig.1_

3

1

2

3

4

5

6

_Fig.2_

6

5

4

3

1

2

3

7

8

_Fig.3_

_Fig.4_